# EUROPÄISCHE PATENTSCHRIFT

(11) **EP 0 921 927 B1**
(45) Veröffentlichungstag und Bekanntmachung des Hinweises auf die Patenterteilung: **27.03.2002**
(21) Anmeldenummer: 97937490.7
(22) Anmeldetag: 16.07.1997
(51) Int. Cl.: B29C 45/14, F04F 5/44

(54) **VERFAHREN ZUR HERSTELLUNG EINES DICHTEN KUNSTSTOFFGEHÄUSES**
METHOD FOR THE PRODUCTION OF A TIGHT PLASTIC HOUSING
PROCEDE DE PRODUCTION D'UN BOITIER EN PLASTIQUE COMPACT

(30) Priorität: 01.08.1996 DE 19631010
(43) Veröffentlichungstag der Anmeldung: 16.06.1999
(73) Patentinhaber: Fritz Himmermann GmbH & Co. KG, 53940 Hellenthal (DE)
(72) Erfinder: LANGE, Harry, A., D-53940 Hellenthal (DE); HUPPERTZ, Franz, D-53937 Schleiden (DE); FITZ, Karl-Heinz, D-53937 Schleiden (DE); DAHMEN, Reiner, D-53937 Gemünd (DE)
(74) Vertreter: Freischem, Werner, Dipl.-Ing.
(86) Internationale Anmeldenummer: EP9703796
(87) Internationale Veröffentlichungsnummer: WO9805486

(56) Entgegenhaltungen:
- EP-A- 0 064 310
- EP-A- 0 158 046
- EP-A- 0 778 096
- DE-A- 4 212 807
- FR-A- 1 118 823
- FR-A- 2 690 376
- GB-A- 2 176 448
- ANDERS S ET AL: "HOLLOW BODIES MADE FROM ENGINEERING THERMOPLASTICS MANUFACTURED BY INJECTION MOULDING" KUNSTSTOFFE EUROPE., Nr. 1, April 1991, MUNCHEN DE, Seiten 68-70, 72 - 75, XP000288686

## Beschreibung

Die Erfindung betrifft eine Strahlpumpe bestehend aus einer Treibdüse, einem Ansaugstutzen, einer Fangdüse, einer Mischdüse und einem Diffusor mit Austrittsöffnung, wobei zumindest der Ansaugstutzen, die Fangdüse, die Mischdüse und der Diffusor zu einem Gehäuse zusammengefaßt sind.

Eine derartige Strahlpumpe ist aus dem Dokument DE 44 00 958 C1 bekannt. Aus welchem Werkstoff das Gehäuse dieser Strahlpumpe ausgebildet ist und wie die einzelnen Bestandteile dieser Strahpumpe zusammengefügt sich, ergibt sich aus diesem Dokument nicht.

Zur Herstellung eines Kunststoff-Bauteiles, welches einen Raum im wesentlichen dicht umschließt, sind vielfältige Verfahren bekannt. Im einfachsten Fall werden die aneinanderzufügenden Flansche gegebenenfalls unter Zwischenfügung einer Dichtung miteinander verschraubt. Andere Verbindungstechniken wie Verschweißen und Verkleben werden ebenfalls vielfältig eingesetzt.

Aufgabe der Erfindung ist es, eine Strahlpumpe zu schaffen, die mit einfachen Mitteln und insbesondere bei der Serienfertigung mit geringen Kosten unter Erzielung eines dichten und haltbaren Gehäuses herstellbar ist.

Diese Aufgabe wird erfindungsgemäß durch die Merkmale des kennzeichnenden Teils des Patentanspruchs 1 gelöst.

Die erfindungsgemäße Strahlpumpe weist ein einen Hohlraum umschließendes Gehäuse auf, das ausschließlich im Spritzgießverfahren hergestellt werden kann, ohne daß der Einsatz verlorener Formkerne notwendig ist. Es wird eine haltbare und dauerhafte Verbindung geschaffen, und das hergestellte Erzeugnis erhält eine homogene Erscheinungsform. Es kann beim Umgießen der Gehäuseteile mit der Wulst der gleiche Werkstoff wie zur Herstellung der Gehäuseteile verwendet werden, so daß ein recyclebares Bauteil aus einem einzigen Werkstoff entsteht. Der zuverlässige Halt der beiden Gehäuseteile wird einerseits durch die Umklammerung der Flansche der Gehäuseteile durch die Kunststoffwulst und andererseits durch die Kunststoffstege, welche die Durchtrittsöffnungen in den Flanschen durchragen, gewährleistet.

In Teilbereichen des Gehäuseumfangs, in denen eine weniger große Dichtigkeit erforderlich ist, können die Flansche und die die Flansche umgreifende Kunststoffwulst unterbrochen sein.

Zur Erhöhung der Dichtigkeit des Gehäuses kann in dem Gehäuserand eines Gehäuseteils im Bereich des Flansches eine umlaufende Nut eingeformt werden. In diese Nut kann entweder vor dem Verbinden der Gehäuseteile ein Dichtring eingelegt werden. Alternativ kann ein komplementärer Steg an dem anderen Gehäuseteil angeformt sein, der in die Nut hineinragt. Durch die Nut-Steg-Kombination entsteht eine Labyrinthwirkung im Randbereich des Gehäuses, wodurch das Ausströmen von Fluiden gedrosselt wird. Vorzugsweise werden beide Maßnahmen miteinander kombiniert, und es wird einerseits eine Dichtung aus Gummi oder elastischem Kunststoff in den Nutgrund eingelegt und andererseits ein Steg an dem anderen Gehäuseteil in die Nut eingefügt, welcher einen Druck auf die Dichtung ausübt.

Beim Umgießen der Gehäuseteile können weitere Kunststoffelemente, z.B. Befestigungselemente angebracht werden, welche entweder an die Kunststoffwulst oder an andere Bereiche des Gehäuses angegossen werden.

Vor dem Umgießen können in die Gehäuseteile weitere Bauelemente eingefügt werden, so daß sich eine sehr komplexe funktionelle Anordnung unterschiedlicher Elemente innerhalb des Gehäuses realisieren läßt.

Um einseitig verschlossene Kanäle innerhalb des Gehäuses zu realisieren, ist es in der Regel notwendig, mit verlorenen Formkernen zu arbeiten, die nicht nach dem Einspritzen des Kunststoffes gezogen werden können, sondern aus dem einseitig geschlossenen Kanal entfernt, beispielsweise ausgespült werden müssen. Bei der Herstellung eines Gehäuses nach dem erfindungsgemäßen Verfahren läßt sich die Realisierung einseitig geschlossener Kanäle vereinfachen. Hierzu wird bei der Herstellung des Gehäuseteiles ein offener Kanal erzeugt, aus dem der Formkern nach dem Gießen des Gehäuseteils herausgezogen werden kann. In die Kanalmündung wird ein Stopfen eingefügt, der beim Umgießen der Gehäuseteile durch Eingießen zusätzlichen Kunststoffmaterials in der Kanalmündung fixiert und abgedichtet wird.

Der Stopfen ist notwendig, um ein unkontrolliertes Hineinlaufen des nachträglich eingespritzten Kunststoffes in den Kanal zu vermeiden.

Die beschriebene Strahlpumpe wurde von der Anmelderin zur Ölförderung in einem Kraftfahrzeuggetriebe entwickelt. Derartige Strahlpumpen bestehen aus einer Treibdüse, einem Ansaugstutzen, einer Fangdüse, einer Mischdüse und einem Diffusor mit Austrittsöffnung. Ein Treibmittel wird unter hohem Druck in die Treibdüse eingeleitet und strömt mit hoher Geschwindigkeit aus der Treibdüse in die Fangdüse. Die Fangdüse steht mit einem Ansaugstutzen in Verbindung, durch den die Förderflüssigkeit angesaugt wird. Das Treibmittel mischt sich mit der Förderflüssigkeit in der Mischdüse und fördert dadurch die Förderflüssigkeit durch den Diffusor hindurch zur Austrittsöffnung.

Bei einer erfindungsgemäßen Strahlpumpe sind zumindest der Ansaugstutzen, die Fangdüse, die Mischdüse und der Diffusor zu einem Gehäuse zusammengefaßt. Dieses Gehäuse besteht aus zwei Gehäuseteilen mit umlaufenden Flanschen, welche miteinander fluchtende Durchtrittsöffnungen aufweisen, die mittels einer aufgegossenen Kunststoffwulst dicht miteinander verbunden sind.

Im Gegensatz zu einer Klebe- oder Schweißverbindung gewährt die aufgegossene Kunststoffwulst eine sehr hohe Lebensdauer und strukturelle Festigung, die für den Langzeit-Einsatz der Strahlpumpe in einem Fahrzeuggetriebe unabdingbar sind.

Die Treibdüse der Strahlpumpe wird vor dem Umgießen der Gehäuseteile als separates Bauteil in eines der Gehäuseteile eingefügt und mit einem Treibmittel-Zufuhrkanal verbunden.

Aufgrund des Umgießens ist es ohne weiteres möglich, komplexe Befestigungs- und Halteelemente an die Kunststoffwulst oder an die Gehäuseteile anzugießen.

Bei der erfindungsgemäßen Strahlpumpe kann ein abgewinkelter Kanalverlauf innerhalb eines der Gehäuseteile realisiert werden. Zwei ineinandermündende Kanalschenkel, die beide auf der Außenseite des Gehäuses münden, werden in dem einen Gehäuseteil mit ziehbaren Formkernen hergestellt. Einer der Schenkel der beiden Kanäle wird vor dem Umgießen mit der Kunststoffwulst mit einem Stopfen verschlossen, der beim Umgießen durch in die Kanalmündung eingegossenes Kunststoffmaterial fixiert wird.

Weitere Vorzüge und Merkmale der Erfindung ergeben sich aus der folgenden Beschreibung eines Ausführungsbeispiels unter Bezugnahme auf die beigefügten Zeichnungen. Die Zeichnungen zeigen in
- Fig. 1: einen Längsschnitt durch beide Gehäuseteile einer erfindungsgemäßen Strahlpumpe vor dem Umgießen,
- Fig. 2: die Draufsicht auf die Außenseite eines der beiden Gehäuseteile der Strahlpumpe aus Figur 1,
- Fig. 3: den Querschnitt durch die in die Gußform zum Umgießen eingelegten Gehäuseteile der Strahlpumpe,
- Fig. 4: die mit der Kunststoffwulst umgossenen Gehäuseteile bei der Entnahme aus der Gußform und
- Fig. 5: eine der Figur 2 entsprechende Ansicht der Strahlpumpe nach Anbringen der Kunststoffwulst.

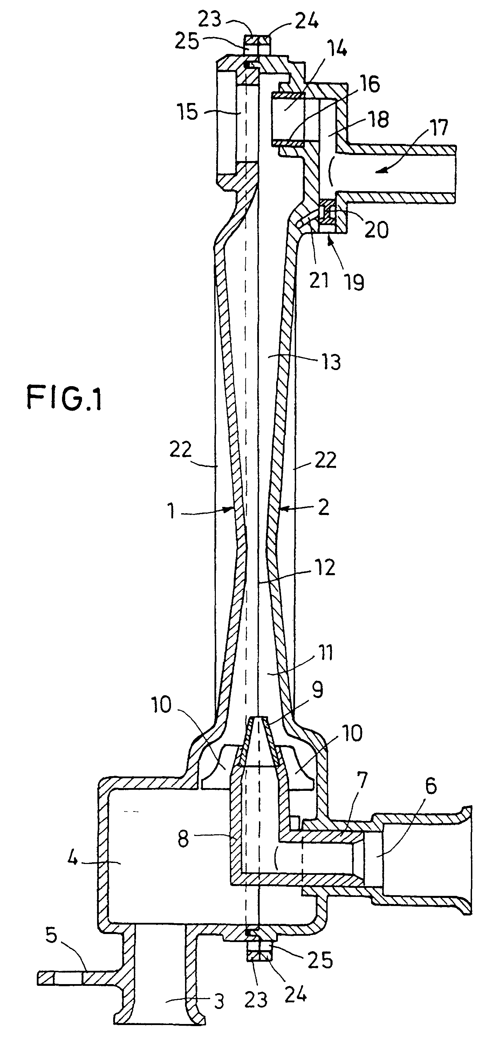

In Figur 1 sind die einzelnen Bestandteile der erfindungsgemäßen Strahlpumpe zu erkennen. Sie besteht aus einem ersten Gehäuseteil 1 und einem zweiten Gehäuseteil 2, welche dicht miteinander zu verbinden sind. Das Gehäuseteil 1 umfaßt einen Ansaugstutzen 3, der in einer Ansaugkammer 4 mündet und eine Befestigungslasche 5 zur Befestigung innerhalb eines Getriebes aufweist.

In den die Ansaugkammer 4 verschließenden Abschnitt des Gehäuseteils 2 mündet der Treibmittel-Zufuhrkanal 6. In diesen Kanal ist ein rohrförmiger Kunststoffstutzen 7 einer Treibdüse 8 eingesteckt. Die Treibdüse 8 ist aus dem gleichen Kunststoff gefertigt wie die beiden Gehäuseteile 1,2. Im Mündungsbereich weist die Treibdüse 8 einen Trichter 9 aus Metall auf, der von dem Kunststoffmaterial der Treibdüse 8 umspritzt ist. Die Treibdüse 8 weist Distanzstege 10 zum Abstützen gegen die Gehäuseteile 1 und 2 auf.

Im Bereich der Mündung der Treibdüse 8, die durch den metallischen Trichter 9 gebildet wird, beginnt die Fangdüse 11, die sich nach oben hin verjüngt. Der engste Bereich des von den beiden Gehäuseteilen 1 und 2 eingeschlossenen Raumes bildet die Mischdüse 12. Nach oben schließt sich der Diffusor 13 mit zwei Austrittsöffnungen 14,15 für das geförderte Medium an. In die Austrittsöffnung 14 ist eine Metallhülse 16 eingedrückt. Der sich an die Austrittsöffnung 14 anschließende Fluid-Führungskanal 17 hat einen abgewinkelten Verlauf.

Um diesen Kanal mit einem ziehbaren Formkern herstellen zu können, mündet sein in Figur 1 senkrecht verlaufender Schenkel 18 in die Außenseite des Gehäuseteils 2. Zum Verschließen wird in die Mündung 19 des senkrechten Schenkels 18 des Fluid-Führungskanals 17 ein Stopfen 20 eingesteckt. Bei dem nachfolgend beschriebenen Umgießvorgang wird in die Mündung 19 zur Fixierung des Stopfens 20 Kunststoffmaterial eingegossen. Hierzu wird in der Wandung des Gehäuseteils 2 ein gerader Fließkanal 21 vorgesehen, der im Bereich des Stopfens 20 in die Mündung mündet. Der Fließkanal 21 führt von dem nächstgelegenen Bereich des Flansches 24 bis in die Mündung 19 des senkrechten Schenkels 18 des Fluid-Führungskanals 17. Beim Umspritzen des Gehäuses wird durch den Fließkanal 33 hindurch Kunststoffmaterial zum Fixieren des Stopfens 20 in die Mündung 19 gedrückt.

Die beiden Gehäuseteile 1,2 weisen zur Erhöhung ihrer Stabilität Verstärkungsrippen 22 auf.

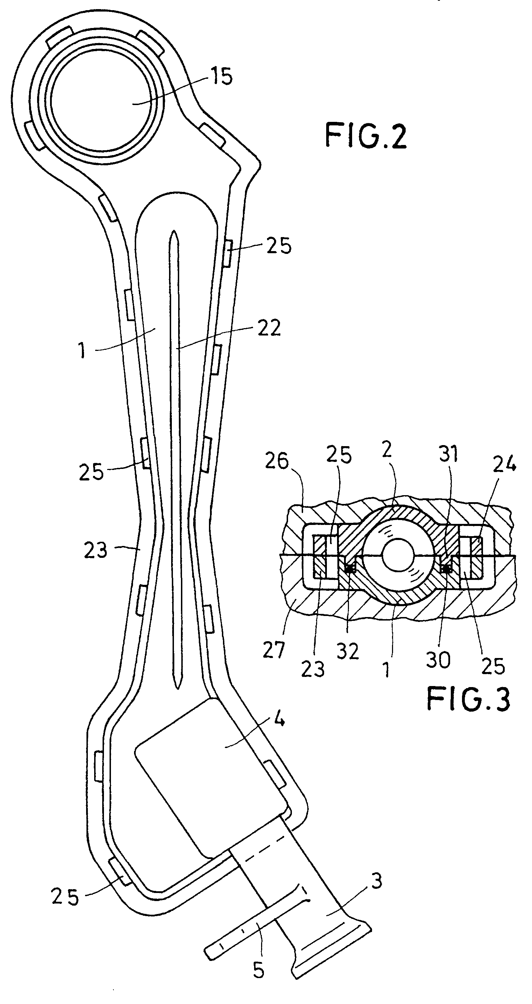

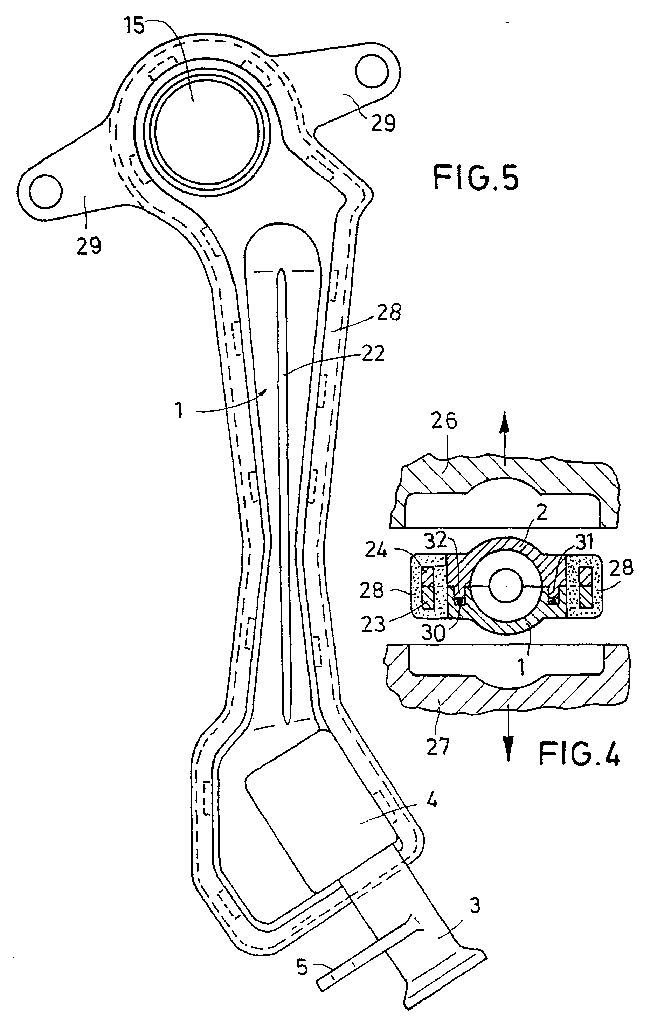

Zur dichten Verbindung der beiden Gehäuseteile 1,2 miteinander weisen diese jeweils einen umlaufenden Flansch 23 bzw. 24 auf. Die Flansche 23, 24 sind an verschiedenen Stellen mit Durchtrittsöffnungen 25 versehen. Wie beispielsweise der Figur 3 zu entnehmen ist, fluchten jeweils zwei Durchtrittsöffnungen 25 in den Flanschen 23,24 der beiden Gehäuseteile 1,2 miteinander. In Figur 3 sind die beiden Gehäuseteile 1,2 in eine aus zwei Formhälften 26,27 bestehende Gußform eingelegt, in der die dichte Verbindung der beiden Gehäuseteile 1,2 hergestellt wird. Die Gußform weist im Bereich der beiden Flansche 23,24 einen Hohlraum auf, in den Kunststoffmaterial zur Bildung einer Kunststoffwulst 28 eingespritzt wird. Die Kunststoffwulst 28, welche die Durchtrittsöffnungen 25 in den Flanschen 23,24 durchragt, ist in den Figuren 4 und 5 erkennbar.

Durch die den gesamten Umfang der Gehäuseteile 1,2 umgreifende Kunststoffwulst 28 wird eine zuverlässige und dichte Verbindung der Gehäuseteile 1 und 2 erzielt. Gegebenenfalls kann es aus fertigungstechnischen Gründen sinnvoll sein, die Kunststoffwulst an bestimmten Stellen des Umfangs in Bereichen, in denen keine hohe Druckdifferenz zwischen der Außenseite und der Innenseite des Gehäuses herrscht, zu unterbrechen.

Bei der Herstellung der Kunststoffwulst 28 können zusätzliche funktionelle Elemente der Strahlpumpe ausgebildet werden. In Figur 5 sind beispielsweise zwei Befestigungslaschen 29 zu erkennen, die seitlich aus der Kunststoffwulst 28 herausragen.

Da nicht immer gewährleistet werden kann, daß die aufgespritzte Kunststoffwulst 28 eine stoffschlüssige Verbindung mit dem Werkstoff der Gehäuseteile 1,2 eingeht, können zusätzliche Abdichtmaßnahmen sinnvoll sein. Im vorliegenden Beispiel weist der Rand des Gehäuseteils 1 im Bereich des Flansches eine umlaufende Nut 30 auf, in die ein umlaufender Steg 31 am gegenüberliegenden Rand des Gehäuseteils 2 eingreift. In den Grund der Nut 30 ist eine Dichtung 32 aus Gummi eingelegt, die durch den Steg 31 gegen den Grund der Nut 30 gedrückt wird.

### Bezugszeichen:

- 1: Gehäuseteil
- 2: Gehäuseteil
- 3: Ansaugstutzen
- 4: Ansaugkammer
- 5: Befestigungslasche
- 6: Treibmittelzufuhrkanal
- 7: rohrförmiger Kunststoffstutzen
- 8: Treibdüse
- 9: Trichter
- 10: Distanzsteg
- 11: Fangdüse
- 12: Mischdüse
- 13: Diffusor
- 14: Austrittsöffnung
- 15: Austrittsöffnung
- 16: Metallhülse
- 17: Fluid-Führungskanal
- 18: senkrechter Schenkel
- 19: Mündung
- 20: Stopfen
- 21: Fließkanal
- 22: Verstärkungsrippe
- 23: Flansch
- 24: Flansch
- 25: Durchtrittsöffnung
- 26: Formhälfte
- 27: Formhälfte
- 28: Kunststoffwulst
- 29: Befestigungslasche
- 30: Nut
- 31: Steg
- 32: Dichtung

## Patentansprüche

1. Strahlpumpe bestehend aus einer Treibdüse (8), einem Ansaugstutzen (3), einer Fangdüse (11), einer Mischdüse (12) und einem Diffusor (13) mit Austrittsöffnung (14,15), wobei zumindest der Ansaugstutzen (3), die Fangdüse (11), die Mischdüse (12) und der Diffusor (13) zu einem Gehäuse zusammengefaßt sind, **dadurch gekennzeichnet, daß** das Gehäuse aus zwei Gehäuseteilen (1,2) aus spritzgegossenem Kunststoff mit gegeneinanderliegenden, umlaufenden Flanschen (23,24) besteht, welche miteinander fluchtende Durchtrittsöffnungen (25) aufweisen und mit einer die Flansche (23,24) umschließenden und deren Durchtrittsöffnungen (25) durchdringenden Kunststoffwulst (28) im Spritzgießverfahren umgossen sind.

2. Strahlpumpe nach Anspruch 1, **dadurch gekennzeichnet, daß** in den Gehäuserand des ersten Gehäuseteils (1) im Bereich des Flansches (23) eine umlaufende Nut (30) eingeformt ist.

3. Strahlpumpe nach Anspruch 2, **dadurch gekennzeichnet, daß** an den Gehäuserand des zweiten Gehäuseteils (2) im Bereich des Flansches (24) ein in die umlaufende Nut (30) des ersten Gehäuseteils (1) einfügbarer Steg (31) angeformt ist.

4. Strahlpumpe nach Anspruch 2 oder 3, **dadurch gekennzeichnet, daß** in die Nut (30) des ersten Gehäuseteils (1) eine Dichtung (32) eingelegt ist.

5. Strahlpumpe nach einem der vorangehenden Ansprüche, **dadurch gekennzeichnet, daß** gemeinsam mit der Kunststoffwulst (28) weitere Kunststoffelemente (29) an die Gehäuseteile (1,2) bzw. an die Kunststoffwulst (28) angegossen sind.

6. Strahlpumpe nach Anspruch 5, **dadurch gekennzeichnet, daß** Befestigungs- und Halteelemente (29) an die Kunststoffwulst (28) bzw. an die Gehäuseteile (1,2) angegossen sind.

7. Strahlpumpe nach einem der vorangehenden Ansprüche, **dadurch gekennzeichnet, daß** in die Gehäuseteile (1,2) weitere Bauelemente (8,16) eingefügt sind.

8. Strahlpumpe nach Anspruch 7, **dadurch gekennzeichnet, daß** die Treibdüse (8) vor dem Umgießen in eines der Gehäuseteile (2) eingefügt und mit einem Treibmittelzufuhrkanal (6) in diesem Gehäuseteil (2) verbunden ist.

9. Strahlpumpe nach einem der vorangehenden Ansprüche, **dadurch gekennzeichnet, daß** mindestens ein Kanal (18), insbesondere ein Fluid-Führungskanal (17), in einem der Gehäuseteile (2) mit einem Stopfen (20) verschlossen ist und daß in die Kanalmündung (19) zur Fixierung des Stopfens (20) Kunststoffmaterial eingegossen ist.

## Claims

1. Jet pump consisting of a propellant nozzle (8), a suction stub (3), a collecting nozzle (11), a mixing nozzle (12), and a diffuser (13) with outlet opening (14, 15), with at least the suction stub (3), collecting nozzle (11), mixing nozzle (12) and diffuser (13) being combined to form a housing, **characterized in that** the housing consists of two housing parts (1, 2) made of injection-molded plastic, with circumferential flanges (23, 24) opposite one another, said flanges having through openings (25) aligned with one another and surrounded by an injected plastic bead (28) using the injection-molding process, said bead surrounding flanges (23, 24) and penetrating their through openings (25).

2. Jet pump according to Claim 1, **characterized in that** a surrounding groove (30) is formed in the housing edge of first housing part (1) in the vicinity of flange (23).

3. Jet pump according to Claim 2, **characterized in that** a rib (31) that can be fitted into circumferential groove (30) of first housing part (1) is formed on the housing edge of second housing part (2) in the vicinity of flange (24).

4. Jet pump according to Claim 2 or 3, **characterized in that** a seal (32) is inserted into groove (30) of first housing part (1).

5. Jet pump according to one of the foregoing claims, **characterized in that** additional plastic elements (29) are cast together with plastic bead (28) on housing parts (1, 2) and/or plastic bead (28).

6. Jet pump according to Claim 5, **characterized in that** fastening and retaining elements (29) are cast on plastic bead (28) and/or in housing parts (1, 2).

7. Jet pump according to one of the foregoing claims, **characterized in that** additional structural elements (8, 16) are inserted into housing parts (1, 2).

8. Jet pump according to Claim 7, **characterized in that** propellant nozzle (8) is inserted into one of housing parts (2) before casting and is connected with a propellant supply channel (6) in this housing part (2).

9. Jet pump according to one of the foregoing claims, **characterized in that** at least one channel (18), especially a fluid guide channel (17), in one of housing parts (2) is sealed by a plug (20) and **in that** plastic material is poured into channel mouth (19) to secure plug (20).

## Revendications

1. Pompe à éjection comportant une buse propulsive (8), un tube d'aspiration (3), une buse collectrice (11), une buse mélangeuse (12) et un diffuseur (13) avec orifice de sortie (14, 15), dont au moins le tube d'aspiration (3), la buse collectrice (11), la buse mélangeuse (12) et le diffuseur (13) sont réunis en un boîtier, **caractérisée en ce que** le boîtier consiste en deux pièces de boîtier (1, 2) en matière plastique moulée par injection et ayant des flasques périphériques (23, 24) se contactant mutuellement et ayant des ouvertures de passage (25) alignées les unes avec les autres et un bourrelet en matière plastique (28) moulé autour des flasques (23, 24) par procédure de moulage par injection et traversant leurs ouvertures de passage (25).

2. Pompe à éjection selon la revendication 1, **caractérisée en ce qu'**une rainure périphérique (30) est formée au bord de la première partie de boîtier (1) dans la région du flasque (23).

3. Pompe à éjection selon la revendication 2, **caractérisée en ce qu'**une projection (31) pouvant être introduite dans la rainure périphérique (30) de la première partie du boîtier (1) est formée d'une seule pièce avec la seconde partie de boîtier (2) au bord de la seconde partie de boîtier (2) dans la région du flasque (24).

4. Pompe à éjection selon la revendication 2 ou 3, **caractérisée en ce qu'**un moyen d'étanchéité (32) est placé dans la rainure (30) de la première partie de boîtier (1).

5. Pompe à éjection selon une des revendications précédentes, **caractérisée en ce que**, en commun avec le bourrelet (28) en matière plastique (28), d'autres éléments en matière plastique (29) sont moulés d'une seule pièce avec les parties de boîtier (1, 2) respectivement le bourrelet en matière plastique (28).

6. Pompe à éjection selon la revendication 5, **caractérisée en ce que** des éléments d'attache et de retenue (29) sont moulés d'une seule pièce avec le bourrelet en matière plastique (28) respectivement les parties de boîtier (1, 2).

7. Pompe à éjection selon une des revendications précédentes, **caractérisée en ce que** d'autres éléments de construction (8, 16) sont encastrés dans les éléments de boîtier (1, 2).

8. Pompe à éjection selon la revendication 7, **caractérisée en ce que** la buse propulsive (8) est insérée avant le moulage dans l'une des pièces de boîtier (2) et est en communication avec un canal d'amenée de fluide moteur (6) dans cette partie de boîtier (2).

9. Pompe à éjection selon une des revendications précédentes, **caractérisée en ce qu'**au moins un passage (18), notamment un passage de conduction de fluide (17), est fermé dans l'une des parties de boîtier (2) au moyen d'un bouchon (20), et **en ce que** de la matière plastique est moulée dans l'embouchure de sortie (19) de ce passage en vue de fixer le bouchon (20) en position.
